# EUROPÄISCHE PATENTSCHRIFT

(11) **EP 2 764 260 B1**
(45) Veröffentlichungstag und Bekanntmachung des Hinweises auf die Patenterteilung: **21.10.2015**
(21) Anmeldenummer: 12756495.3
(22) Anmeldetag: 11.09.2012
(51) Int. Cl.: F16C 11/06

(54) **VERBINDUNGSANORDNUNG FÜR EIN FAHRZEUG**
CONNECTING ASSEMBLY FOR A VEHICLE
ENSEMBLE DE RACCORDEMENT POUR UN VÉHICULE

(30) Priorität: 07.10.2011 DE 102011084163
(43) Veröffentlichungstag der Anmeldung: 13.08.2014
(73) Patentinhaber: ZF Friedrichshafen AG, 88038 Friedrichshafen (DE)
(72) Erfinder: NACHBAR, Frank, 49088 Osnabrück (DE); ADAMCZYK, Dirk, 88697 Bermatingen (DE)
(86) Internationale Anmeldenummer: PCT/EP2012/067738
(87) Internationale Veröffentlichungsnummer: WO 2013/050218

(56) Entgegenhaltungen:
- EP-A2- 1 953 012
- DE-A1- 19 638 252
- DE-A1-102004 061 057
- DE-A1-102005 019 559
- US-A- 5 713 689

## Beschreibung

Die Erfindung betriff eine Verbindungsanordnung für ein Fahrzeug, mit einem einen Verbindungsbereich umfassenden Strukturbauteil, einem ein Lagerelement und ein in diesem bewegbar gelagertes und sich aus diesem in einer axialen Richtung heraus erstreckendes Gelenkinnenteil umfassenden Gelenk, dessen Lagerelement zusammen mit dem Verbindungsbereich eine Einlage bildet, und einem durch Umgießen der Einlage hergestellten und diese umschließenden Gussteil, aus welchem sich das Strukturbauteil und das Gelenkinnenteil heraus erstrecken.

Die DE 196 38 252 A1 offenbart ein Kugelgelenk mit einer in einer Aussparung eines Kugelgelenkgehäuses rotationsbeweglich gelagerten Kugel mit einem an dieser angebrachten und nach außen abstehenden Kugelzapfen, wobei die Aussparung die Kugel um mehr als ihre Halbschale umgibt. Das Kugelgelenkgehäuse besteht aus einem rohrförmigen Wandteil mit nach innen weisenden Verankerungselementen, wobei der durch den Wandteil gebildete Raum mit einem eingegossenen oder eingespritzten, die Aussparung bildenden Gehäusematerial ausgefüllt ist, in welcher die Kugel rotationsbeweglich über eine diese zumindest im Bereich der Aussparung umgebende Lager-Zwischenschicht gelagert ist.

Die EP 1 953 012 A2 offenbart eine Gelenkstange zum Einsatz in Fahrzeugen, mit einem Strebenkörper, an dessen wenigstens einem Ende sich ein Gelenk anschließt, wobei der Strebenkörper aus einem offenen Profil gebildet wird und das Gelenk aus einer, in einer dünnwandigen Gleitschale gelenkig gelagerten Kugel eines Kugelzapfens gebildet wird. Das Ende des Strebenkörpers und die Gleitschale sind gemeinsam zumindest teilweise mit einer Kunststoffummantelung umspritzt, die die Verbindung zwischen dem Ende des Strebenkörpers und der dünnwandigen Gleitschale des Kugelgelenkes herstellt. Das Ende des Strebenkörpers ist z.B. als ein um die Kugel umlaufender Ring ausgebildet.

Derartige, auch als Hybrid-Kugelgelenke bezeichnete Kugelgelenke bestehen in der Regel aus zwei Unterkomponenten, von denen eine erste Unterkomponente eine Kugelgelenk-Einheit mit Kugelzapfen und Lagerelement und eine zweite Unterkomponente ein Strukturbauteil bildet. Die beiden Unterkomponenten werden mit Hilfe eines zusätzlichen Elements durch einen Montagegussprozess (Spritzguss, Druckguss, etc.) formschlüssig miteinander verbunden, welches somit ein Gussteil bildet.

Bei derzeitigen Hybrid-Kugelgelenken besteht jedoch das Problem, dass die maximal übertragbaren Kräfte in axialer Richtung nicht für alle Einsatzzwecke groß genug sind.

Ausgehend hiervon liegt der Erfindung die Aufgabe zugrunde, bei einer Verbindungsanordnung der eingangs genannten Art die zwischen dem Gelenk und dem Strukturbauteil übertragbaren Axialkräfte erhöhen zu können.

Diese Aufgabe wird durch eine Verbindungsanordnung nach Anspruch 1 und durch ein Verfahren nach Anspruch 14 gelöst. Bevorzugte Weiterbildungen der Verbindungsanordnung und des Verfahrens sind in den Unteransprüchen und in der nachfolgenden Beschreibung gegeben.

Die Verbindungsanordnung für ein Fahrzeug weist ein einen Verbindungsbereich umfassendes Strukturbauteil, ein Lagerelement und ein in diesem bewegbar gelagertes und sich aus diesem in einer axialen Richtung heraus erstreckendes Gelenkinnenteil umfassendes Gelenk, dessen Lagerelement zusammen mit dem Verbindungsbereich eine Einlage bildet, und ein durch Umgießen der Einlage hergestelltes und diese umschließendes Gussteil auf, aus welchem sich das Strukturbauteil und das Gelenkinnenteil heraus erstrecken, wobei die Einlage ein formschlüssig mit dem Strukturbauteil ineinander greifendes Verschlussbauteil aufweist, welches zusammen mit dem Strukturbauteil eine das Lagerelement in axialer Richtung formschlüssig sichernde Gelenkaufnahme bildet. Vorzugsweise ist das Lagerelement von der Gelenkaufnahme umschlossen. Insbesondere ist das Lagerelement von der Gelenkaufnahme axial oder wenigstens axial umschlossen. Vorteilhafter Weise ist das Lagerelement vor dem Umgießen mit einem Haftvermittler behandelt worden oder weist an seiner Außenseite einen Haftvermittler auf, der bei der Herstellung des Lagerelementes aufgetragen wurde.

Durch die das Lagerelement in axialer Richtung formschlüssig sichernde Gelenkaufnahme ist die axiale Belastbarkeit des Gelenks deutlich erhöht. Insbesondere ist die durch die Gelenkaufnahme bewirkte axiale Sicherung zusätzlich zu einer von dem Gussteil bewirkten axialen Sicherung vorgesehen. Ferner bilden das Strukturbauteil und das Verschlussbauteil separate Bauteile, die vorzugsweise bereits vor der Montage der Verbindungsanordnung ihre endgültige Form aufweisen. Insbesondere sind das Strukturbauteil und das Verschlussbauteil vollständig vorfertigbar. Somit lässt sich die Verbindungsanordnung einfach montieren und ist kostengünstig herstellbar. Wäre die Gelenkaufnahme hingegen einstückig ausgebildet, könnte es in einigen Fällen erforderlich sein, eine oder mehrere Axialsicherungen für das Lagerelement nach seinem Einsetzen in die Gelenkaufnahme radial nach innen abzubiegen, da das Lagerelement sonst nicht montierbar wäre. Ein derartiges Abbiegen bei bereits montiertem Gelenk ist aber mit einem nicht unerheblichen Aufwand verbunden.

Als radial wird insbesondere eine oder jedwede Richtung bezeichnet, die quer zur axialen Richtung verläuft. Vorzugsweise ist dem Gelenk eine Längsmittelachse zugeordnet, die in axialer Richtung verläuft.

Bevorzugt verläuft die Gelenkaufnahme um die Längsmittelachse des Gelenks herum. Insbesondere umringt die Gelenkaufnahme das Lagerelement. Somit ist das Lagerelement auch in radialer Richtung formschlüssig in der Gelenkaufnahme gesichert. Insbesondere ist das Lagerelement von der Gelenkaufnahme radial umschlossen. Vorteilhaft ist das Lagerelement von der Gelenkaufnahme sowohl axial als auch radial umschlossen.

Gemäß einer Weiterbildung liegt die Gelenkaufnahme direkt an dem Lagerelement an. Dies ist insbesondere bei der Übertragung von Kräften zwischen dem Gelenk und dem Strukturbauteil vorteilhaft.

Das Lagerelement sitzt vorzugsweise fest, insbesondere starr, in der Gelenkaufnahme. Vorteilhaft ist das Lagerelement zwischen dem Strukturbauteil und dem Verschlussbauteil, insbesondere zwischen dem Verbindungsbereich des Strukturbauteils und dem Verschlussbauteil angeordnet. Das Verschlussbauteil greift mit dem Strukturbauteil vorzugsweise im Verbindungsbereich formschlüssig ineinander.

Bevorzugt übergreift das Strukturbauteil das Lagerelement in axialer Richtung auf einer dem Verschlussbauteil abgewandten Seite. Ergänzend oder alternativ ist es möglich, dass das Verschlussbauteil das Lagerelement in axialer Richtung auf einer dem Strukturbauteil abgewandten Seite übergreift. Insbesondere übergreift die Gelenkaufnahme das Lagerelement in axialer Richtung beidseitig.

Das Strukturbauteil und das Verschlussbauteil sind bevorzugt in axialer Richtung ineinander gesteckt. Insbesondere sind das Strukturbauteil und das Verschlussbauteil durch einen Schraubverschluss, einen Drehverschluss oder einen Steck-Drehverschluss, wie z.B. einen Bajonett-Verschluss, formschlüssig miteinander verbunden.

Gemäß einer Ausgestaltung weist ein erstes der Bauteile (von dem Strukturbauteil und dem Verschlussbauteil) wenigstens ein Eingriffselement auf, mittels welchem das Strukturbauteil und das Verschlussbauteil formschlüssig miteinander verbunden sind. Insbesondere ist das Eingriffselement mit einem radialen Vorsprung versehen. Das zweite Bauteil weist bevorzugt eine dem ersten Bauteil abgewandte Anlagefläche auf, an welcher das Eingriffselement mit seinem radialen Vorsprung axial anliegt. Vorzugsweise wird das Eingriffselement mit seinem radialen Vorsprung durch Verdrehen des Verschlussbauteils relativ zu dem Strukturbauteil um die Längsmittelachse des Gelenks mit der Anlagefläche zur Anlage gebracht. Vorteilhaft erstreckt sich das Eingriffselement durch eine in dem zweiten Bauteil vorgesehene Aufnahmeöffnung axial hindurch. Insbesondere sitzt das Lagerelement in der Aufnahmeöffnung und/oder ist innerhalb dieser angeordnet.

Bevorzugt hintergreift das Eingriffselement mit seinem radialen Vorsprung einen die Aufnahmeöffnung begrenzenden Rand. Der Rand ist insbesondere ringförmig oder ringsegmentförmig ausgebildet. Insbesondere ist die Anlagefläche an dem Rand vorgesehen und/ oder durch diesen gebildet.

Gemäß einer Weiterbildung der Verbindungsanordnung ist neben oder im Abstand zu dem Eingriffselement wenigstens eine axial durchgehende Ausnehmung in dem Rand vorgesehen, die derartige Abmessungen aufweist, dass das Eingriffselement durch sie hindurch passt. Diese Ausnehmung ist für die Montage der Gelenkaufnahme vorgesehen, insbesondere für das Ineinanderstecken von Strukturbauteil und Verschlussbauteil. Das Eingriffselement des Verschlussbauteils kann somit während des Ineinandersteckens von Strukturbauteil und Verschlussbauteil durch die Ausnehmung hindurch gesteckt werden, wonach das Verschlussbauteil relativ zu dem Strukturbauteil, insbesondere um die Längsmittelachse des Gelenks, verdreht wird. Durch das Verdrehen wird das Verschlussbauteil formschlüssig mit dem Strukturbauteil verbunden. Insbesondere hintergreift das Eingriffselement mit seinem radialen Vorsprung durch das Verdrehen den die Aufnahmeöffnung begrenzenden Rand. Das Verschlussbauteil und das Strukturbauteil sind somit bevorzugt mittels eines Drehverschlusses oder Steck-Drehverschlusses formschlüssig miteinander verbunden, der vorzugsweise das wenigstens eine Eingriffselement und den die Aufnahmeöffnung begrenzenden Rand umfasst, in dem vorteilhaft die wenigstens eine Ausnehmung zum Durchtritt des Eingriffselements vorgesehen ist.

Gemäß einer Weiterbildung weist das zweite Bauteil wenigstens Schlitz auf, in den das Eingriffselement eingreift. Insbesondere greift das Eingriffselement mit seinem radialen Vorsprung radial in den Schlitz ein. Der Schlitz verläuft bevorzugt in oder im Wesentlichen in Umfangsrichtung des Gelenks. Vorzugsweise ist der Schlitz in Umfangsrichtung des Gelenks offen oder zumindest einseitig offen. Bevorzugt greift das Eingriffselement mit seinem radialen Vorsprung durch Verdrehen des Verschlussbauteils relativ zu dem Strukturbauteil um die Längsmittelachse des Gelenks in den Schlitz ein. Insbesondere ist der radiale Vorsprung in den Schlitz eingeschoben. Vorteilhaft ist der Schlitz in Umfangsrichtung des Gelenks lediglich einseitig offen. Somit kann das Verdrehen der Verschlussbauteils relativ zu dem Strukturbauteil durch das umfangsseitige Schlitzende begrenzt werden. Der Schlitz ist beispielsweise auf der dem ersten Bauteil abgewandten Seite des die Aufnahmeöffnung begrenzenden Rands vorgesehen. Insbesondere ist die Anlagefläche an dem Schlitz vorgesehen und/oder durch eine den Schlitz in axialer Richtung begrenzende Fläche gebildet. Das Verschlussbauteil und das Strukturbauteil sind somit bevorzugt mittels eines Drehverschlusses oder Steck-Drehverschlusses formschlüssig miteinander verbunden, der vorzuzugsweise das wenigstens eine Eingriffselement und den wenigstens einen Schlitz umfasst.

Das erste Bauteil ist bevorzugt das Verschlussbauteil, und das zweite Bauteil ist bevorzugt das Strukturbauteil. Alternativ kann das erste Bauteil aber auch das Strukturbauteil und das zweite Bauteil das Verschlussbauteil sein.

Gemäß einer Ausgestaltung ist der Verbindungsbereich ringförmig ausgebildet. Insbesondere begrenzt der Verbindungsbereich eine oder die Aufnahmeöffnung, in der vorzugsweise das Lagerelement sitzt und/oder angeordnet ist. Der Innendurchmesser dieser Aufnahmeöffnung kann kleiner, größer oder gleich dem größten AußeNdurchmesser des Lagerelements sein. Ist der Innendurchmesser der Aufnahmeöffnung kleiner als der größte Außendurchmesser des Lagerelements, so ist das Lagerelement vorzugsweise axial an einem oder dem die Aufnahmeöffnung begrenzenden Rand abgestützt. Der Rand sichert somit das Lagerelement axial formschlüssig an dem Verbindungsbereich.

Gemäß einer Weiterbildung weist das Strukturbauteil im Verbindungsbereich wenigstens eine Axialsicherung auf. Insbesondere erstreckt sich die Axialsicherung in oder im Wesentlichen in axialer Richtung. Die Axialsierung kann durch den die Aufnahmeöffnung des Strukturbauteils begrenzenden Rand gebildet sein. Bevorzugt erstreckt sich die Axialsicherung aber in oder im Wesentlichen in axialer Richtung von diesem Rand weg. Die Axialsicherung liegt vorzugsweise an dem Lagerelement an. Ferner kann die Axialsicherung ganz oder teilweise um das Lagerelement herumlaufen. Vorteilhaft übergreift die Axialsicherung das Lagerelement in axialer Richtung, insbesondere auf einer dem Verschlussbauteil abgewandten Seite. Bevorzugt verläuft die Axialsicherung dazu gegenüber der axialen Richtung zumindest bereichsweise gekrümmt oder geneigt. Somit ist das Lagerelement vorzugsweise in axialer Richtung formschlüssig an der Axialsicherung und somit an dem Strukturbauteil gesichert. Sind mehrere Axialsicherungen an dem Strukturbauteil vorgesehen, so sind diese insbesondere gleichartig aufgebaut und vorzugsweise um das Lagerelement herum gleichmäßig verteilt angeordnet.

Gemäß einer Ausgestaltung ist das Verschlussbauteil ringförmig ausgebildet. Insbesondere begrenzt das Verschlussbauteil eine oder die Aufnahmeöffnung, in der vorzugsweise das Lagerelement sitzt und/oder angeordnet ist. Der Innendurchmesser dieser Aufnahmeöffnung kann kleiner, größer oder gleich dem größten Außendurchmesser des Lagerelements sein. Ist der Innendurchmesser der Aufnahmeöffnung kleiner als der größte Außendurchmesser des Lagerelements, so ist das Lagerelement vorzugsweise axial an einem oder dem die Aufnahmeöffnung begrenzenden Rand abgestützt. Der Rand sichert somit das Lagerelement axial formschlüssig an dem Verschlussbauteil.

Gemäß einer Weiterbildung weist das Verschlussbauteil wenigstens eine Axialsicherung auf. Insbesondere erstreckt sich die Axialsicherung in oder im Wesentlichen in axialer Richtung. Die Axialsierung kann durch den die Aufnahmeöffnung des Verschlussbauteils begrenzenden Rand gebildet sein. Bevorzugt erstreckt sich die Axialsicherung aber in oder im Wesentlichen in axialer Richtung von diesem Rand weg. Die Axialsicherung liegt vorzugsweise an dem Lagerelement an. Ferner kann die Axialsicherung ganz oder teilweise um das Lagerelement herumlaufen. Vorteilhaft übergreift die Axialsicherung das Lagerelement in axialer Richtung, insbesondere auf einer dem Verbindungsbereich abgewandten Seite. Bevorzugt verläuft die Axialsicherung dazu gegenüber der axialen Richtung zumindest bereichsweise gekrümmt oder geneigt. Somit ist das Lagerelement vorzugsweise in axialer Richtung formschlüssig an der Axialsicherung und somit an dem Verschlussbauteil gesichert. Sind mehrere Axialsicherungen an dem Verschlussbauteil vorgesehen, so sind diese insbesondere gleichartig aufgebaut und vorzugsweise um das Lagerelement herum gleichmäßig verteilt angeordnet.

Das Lagerelement ist vorzugsweise fest, insbesondere starr, mit der Gelenkaufnahme verbunden. Insbesondere ist das Lagerelement mittels oder zusätzlich mittels des Gussteils fest, insbesondere starr, mit der Gelenkaufnahme verbunden. Bevorzugt ist das Lagerelement mit dem Verbindungsbereich und/oder mit dem Verschlussbauteil mittels oder zusätzlich mittels des Gussteils verbunden, vorzugsweise formschlüssig. Das Gussteil ist bevorzugt fest, insbesondere starr, mit dem Verbindungsbereich und/ oder mit dem Lagerelement und/ oder mit dem Verschlussbauteil und/ oder mit der Einlage verbunden. Insbesondere steht das Gussteil mit dem Lagerelement und/ oder mit dem Verbindungsbereich und/oder mit dem Verschlussbauteil und/ oder mit der Einlage in direktem Kontakt.

Das Gussteil bildet insbesondere einen einteiligen Körper, in dessen Material vorzugsweise die Einlage eingebettet ist. Bevorzugt bildet das Gussteil einen starren Körper. Vorteilhaft bildet das Gussteil einen materialhomogenen oder im Wesentlichen materialhomogenen Körper. Die Einlage ist vorzugsweise formschlüssig in das Material des Gussteils eingebettet. Das Gussteil besteht bevorzugt aus Kunststoff oder aus Metall. Beispielsweise ist das Gussteil ein Spritzgussteil, ein Druckgussteil oder durch ein anderes geeignetes Gussverfahren hergestellt.

Dem Gelenkinnenteil ist insbesondere eine Längsmittelachse zugeordnet. Bevorzugt ist das Gelenkinnenteil rotationssymmetrisch oder im Wesentlichen rotationssymmetrisch zu einer Rotationsachse ausgebildet, die vorzugsweise mit der Längsmittelachse des Gelenkinnenteils zusammenfällt. Das Gelenkinnenteil besteht bevorzugt aus Metall, insbesondere aus Stahl.

Gemäß einer Ausgestaltung der Verbindungsanordnung bildet das Gelenkinnenteil einen einen Lagerbereich umfassenden Gelenkzapfen, der mit seinem Lagerbereich in dem Lagerelement angeordnet ist. Bevorzugt bildet der Lagerbereich eine Gelenkkugel, sodass das Gelenkinnenteil und/oder der Gelenkzapfen bevorzugt einen Kugelzapfen bildet. Das Gelenk bildet somit insbesondere ein Kugelgelenk. Vorzugsweise umschließt das Lagerelement den Lagerbereich. Das Lagerelement ist beispielsweise als Lagerschale oder Kugelschale ausgebildet. Vorzugsweise übergreift der Verbindungsbereich und/ oder das Verschlussbauteil den Lagerbereich in axialer Richtung. Insbesondere übergreift die Gelenkaufnahme den Lagerbereich in axialer Richtung, vorzugsweise beidseitig. Der Lagerbereich ist bevorzugt axial von der Gelenkaufnahme umschlossen, insbesondere unter Zwischenschaltung des Lagerelements. Ferner ist der Lagerbereich vorzugsweise radial von der Gelenkaufnahme umschlossen, insbesondere unter Zwischenschaltung des Lagerelements.

Bevorzugt ist das Lagerelement rotationssymmetrisch oder im Wesentlichen rotationssymmetrisch zu einer Rotationsachse ausgebildet, die vorzugsweise mit der Längsmittelachse des Gelenks zusammenfällt. Insbesondere umfasst das Lagerelement eine hohlkugelförmige Lagerfläche, an der eine kugelförmige Außenfläche der Gelenkkugel gleitfähig anliegt. Das Lagerelement besteht vorzugsweise aus Kunststoff. Der Kunststoff kann mit Fasern, z.B. mit Glasfasern und/oder Kohlefasern, versetzt sein, durch welche die Festigkeit des Lagerelements erhöht werden kann. Alternativ ist der Kunststoff frei von Fasern. Vorteilhaft weist das Lagerelement eine kugelförmige oder annähernd kugelförmige Außenfläche auf.

Bevorzugt erstrecken sich das Strukturbauteil und das Gelenkinnenteil in unterschiedlichen Richtungen aus dem Gusseil heraus. Insbesondere erstreckt sich das Gelenkinnenteil in axialer Richtung aus dem Gussteil heraus. Das Strukturbauteil erstreckt sich vorzugsweise quer oder schräg zur axialen Richtung aus dem Gussteil heraus. Bevorzugt erstreckt sich das Strukturbauteil in oder im Bereich einer Ebene aus dem Gussteil heraus, die quer zur axialen Richtung und durch den Mittelpunkt der Gelenkkugel verläuft. Dies ist zur Übertragung von radialen Kräften zwischen dem Gelenks und dem Strukturbauteil vorteilhaft. Das Gelenkinnenteil erstreckt sich insbesondere aus der Gelenkaufnahme heraus, vorzugsweise in axialer Richtung.

Das Strukturbauteil besteht bevorzugt aus Metall, insbesondere aus Stahl. Beispielsweise besteht das Strukturbauteil aus Blech. Alternativ kann das Strukturbauteil ein Rohr oder eine Stange umfassen. Beispielsweise handelt es sich bei dem Strukturbauteil um einen langgestreckten oder mehreckigen Körper. Insbesondere erstreckt sich das Strukturbauteil außerhalb des Gussteils von dem Gelenk weg, vorzugsweise quer oder schräg zur axialen Richtung. Das Strukturbauteil kann rotationssymmetrisch oder im Wesentlichen rotationssymmetrisch ausgebildet sein, z. B. wenn es ein Rohr oder eine Stange umfasst. Alternativ kann das Strukturbauteil aber auch keinen Rotationskörper bilden.

Das Strukturbauteil ist bevorzugt im Abstand zu dem Gelenk und/oder zu dem Gussteil mit einem oder wenigstens einem anderen Bauteil, vorzugsweise fest, verbunden oder verbindbar. Insbesondere ist das Strukturbauteil zur Übertragung von Kräften zwischen dem Gelenk und dem anderen Bauteil ausgelegt. Das andere Bauteil ist vorzugsweise ein Fahrzeugbauteil. Beispielsweise ist das andere Bauteil durch einen Fahrzeugaufbau, ein Fahrgestell, ein anderes Gelenk, wie z. B. ein anderes Kugelgelenk, ein Elastomerlager, eine Spurstange, einen Wankstabilisator, einen Radlenker, einen Radträger oder ein beliebiges anderes Fahrwerkbauteil gebildet. Bevorzugt weist das andere Bauteil zu dem Gelenk und/ oder zu dem Lagerelement und/ oder zu dem Gelenkinnenteil und/oder zu dem Verschlussbauteil und/ oder zu dem Gussteil einen Abstand auf.

An dem Strukturbauteil und/oder an dem Verschlussbauteil und/ oder an dem Lagerelement und/ oder an dem Gussteil ist bevorzugt ein oder wenigstens ein Dichtelement befestigt, welches sich bis zu dem Gelenkinnenteil erstreckt und vorzugsweise dichtend an diesem anliegt. Insbesondere liegt das Dichtelement an dem Gelenkinnenteil in einem Bereich an, der außerhalb des Lagerelements und/ oder außerhalb des Gussteils liegt. Das Dichtelement ist vorzugsweise ein Dichtungsbalg.

Die Erfindung betrifft ferner ein Verfahren zur Herstellung der Verbindungsanordnung, wobei das Gelenkinnenteil bewegbar in dem Lagerelement gelagert wird, wonach das Lagerelement zwischen dem Strukturbauteil und dem Verschlussbauteil angeordnet und dieses mit dem Strukturbauteil formschlüssig verbunden wird, bevor die aus dem Lagerelement, dem Verbindungsbereich und dem Verschlussbauteil gebildete Einlage mit einem gießfähigen und aushärtbaren Material umgossen wird, welches nach seinem Aushärten das Gussteil bildet. Die Verbindungsanordnung kann dabei gemäß allen erläuterten Ausgestaltungen weitergebildet sein.

Gemäß einer Ausgestaltung werden das Verschlussbauteil und das Strukturbauteil durch einen Drehverschluss oder Steck-Drehverschluss formschlüssig miteinander verbunden und zum Ausbilden dieser Verbindung axial ineinandergesteckt und relativ zueinander um eine in axialer Richtung verlaufende Längsmittelachse des Gelenks verdreht. Das Verdrehen erfolgt dabei insbesondere nach dem Ineinanderstecken.

Die Erfindung wird nachfolgend anhand bevorzugter Ausführungsformen unter Bezugnahme auf die Zeichnung beschrieben. In der Zeichnung zeigen:
Fig. 1 eine Schnittansicht durch eine Verbindungsanordnung gemäß einer ersten Ausführungsform,
Fig. 2 eine perspektivische Ansicht des aus Fig. 1 ersichtlichen Kugelgelenks,
Fig. 3 eine perspektivische Ansicht des Kugelgelenks mit dem aus Fig.1 ersichtlichen Verschlussbauteil,
Fig. 4 eine perspektivische Ansicht des Kugelgelenks und des Verschlussbauteils im auf das Kugelgelenk aufgeschobenen Zustand,
Fig. 5 eine perspektivische Ansicht des Kugelgelenks mit aufgeschobenern Verschlussbauteil und des aus Fig. 1 ersichtlichen Strukturbauteils,
Fig. 6 eine perspektivische Ansicht des Kugelgelenks mit aufgeschobenem Verschlussbauteil und des Strukturbauteils im auf das Kugelgelenk aufgesetzten Zustand,
Fig. 7 eine Draufsicht auf die Anordnung nach Fig. 6,
Fig. 8 eine perspektivische Ansicht des Kugelgelenks mit aufgeschobenem Verschlussbauteil und aufgesetztem Strukturbauteil nach dem Verriegeln des Verschlussbauteils mit dem Strukturbauteil,
Fig. 9 eine Draufsicht auf die Anordnung nach Fig. 8,
Fig. 10 eine Schnittansicht durch eine Verbindungsanordnung gemäß einer zweiten Ausführungsform,
Fig. 11 eine perspektivische Ansicht des Kugelgelenks und des Verschlussbauteils gemäß der zweiten Ausführungsform,
Fig. 12 eine perspektivische Ansicht des Kugelgelenks und des Verschlussbauteils gemäß der zweiten Ausführungsform im auf das Kugelgelenk aufgeschobenen Zustand,
Fig. 13 eine perspektivische Ansicht des Kugelgelenks mit aufgeschobenem Verschlussbauteil und des Strukturbauteils gemäß der zweiten Ausführungsform,
Fig. 14 eine perspektivische Ansicht des Kugelgelenks mit aufgeschobenem Verschlussbauteil und des Strukturbauteils gemäß der zweiten Ausführungsform im auf das Kugelgelenk aufgesetzten Zustand,
Fig. 15 eine Draufsicht auf die Anordnung nach Fig. 14,
Fig. 16 eine perspektivische Ansicht des Kugelgelenks mit aufgeschobenem Verschlussbauteil und aufgesetztem Strukturbauteil gemäß der zweiten Ausführungsform nach dem Verriegeln des Verschlussbauteils mit dem Strukturbauteil und
Fig. 17 eine Draufsicht auf die Anordnung nach Fig. 16.

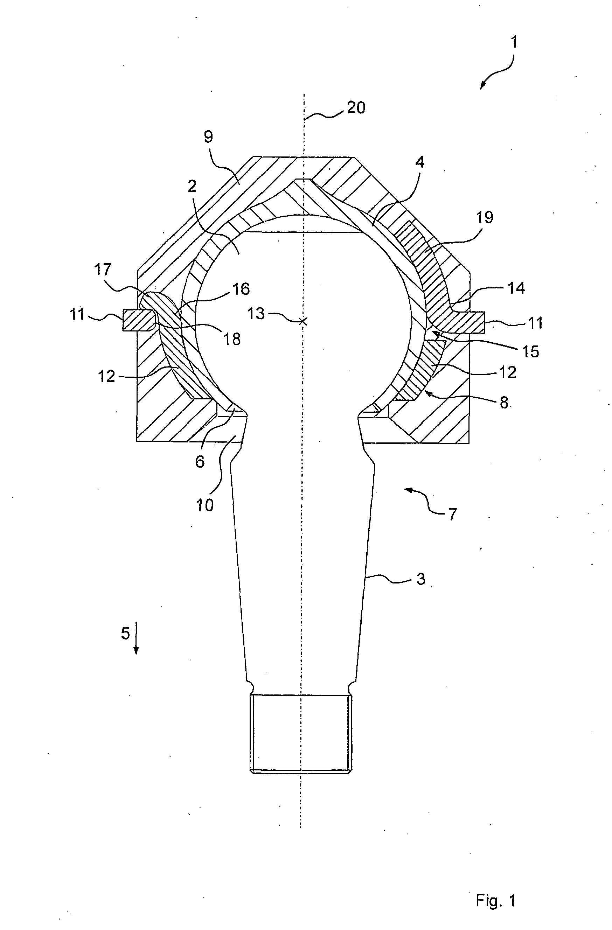

Aus Fig. 1 ist eine Schnittansicht durch eine Verbindungsanordnung 1 gemäß einer ersten Ausführungsform ersichtlich, wobei ein eine Gelenkkugel 2 umfassender Kugelzapfen 3 mit seiner Gelenkkugel 2 in einer Kugelschale 4 gleitfähig gelagert ist. Der Kugelzapfen 3 erstreckt sich in einer axialen Richtung 5 durch eine in der Kugelschale 4 vorgesehene Öffnung 6 aus der Kugelschale 4 heraus. Die Kugelschale 4 und der Kugelzapfen 3 bilden zusammen ein Kugelgelenk 7, welches mit der Kugelschale 4 in einer Gelenkaufnahme 8 sitzt, welche die Kugelschale 4 radial und axial umschließt. Die Kugelschale 4 ist somit axial formschlüssig in der Gelenkaufnahme 8 gesichert.

Die Gelenkaufnahme 8 und die Kugelschale 4 sind in einem Gussteil 9 angeordnet, welches durch Umgießen der Gelenkaufnahme 8 und der Kugelschale 4 mit einem gießfähigen, aushärtbaren Material hergestellt ist, welches nach seinem Aushärten das Gussteil 9 bildet. Die Gelenkaufnahme 8 und die Kugelschale 4 bilden in diesem Sinne eine in das Gussteil 9 eingebettete Einlage. Das Gussteil 9 ist mit einer Zapfenöffnung 10 versehen, durch welche sich der Kugelzapfen 3 in axialer Richtung 5 aus dem Gussteil 9 heraus erstreckt.

Die Gelenkaufnahme 8 ist aus einem Strukturbauteil 11 und einem Verschlussbauteil 12 zusammengesetzt, welches mit dem Strukturbauteil 11 formschlüssig ineinander greift. Das Strukturbauteil 11 erstreckt sich auf Höhe des Mittelpunkts 13 der Gelenkkugel 2 in radialer Richtung aus dem Gussteil 9 heraus, wobei der in dem Gussteil 9 eingebettete Teil des Strukturbauteils 11 als Verbindungsbereich 14 bezeichnet wird. Der Verbindungsbereich 14 ist ringförmig ausgebildet und begrenzt eine Aufnahmeöffnung 15, in der die Kugelschale 4 angeordnet ist. Das Verschlussbauteil 12 weist mehrere Eingriffselemente 16 auf, die jeweils mit einem radialen Vorsprung 17 versehen sind. Die Eingriffselemente 16 erstrecken sich axial durch die Aufnahmeöffnung 15 hindurch und hintergreifen mit ihren radialen Vorsprüngen 17 einen die Aufnahmeöffnung begrenzenden Rand 18 des Strukturbauteils 11. Mittels der Eingriffselemente 16 sind das Strukturbauteil 11 und das Verschlussbauteil 12 formschlüssig miteinander verbunden.

Das Verschlussbauteil 12 übergreift die Kugelschale 4 sowie die Gelenkkugel 2 in axialer Richtung auf der der Zapfenöffnung 10 zugewandten Seite und liegt an der Kugelschale 4 an. Dazu erstreckt sich das Verschlussbauteil 12 im Wesentlichen in axialer Richtung, verläuft gegenüber dieser aber geneigt oder gekrümmt. Ferner übergreift das Strukturbauteil 11 die Kugelschale 4 sowie die Gelenkkugel 2 in axialer Richtung auf der der Zapfenöffnung 10 abgewandten Seite, wobei das Strukturbauteil 11 an der Kugelschale 4 anliegt. Dazu weist das Strukturbauteil 11 mehrere Axialsicherungen 19 auf, die sich im Wesentlichen in axialer Richtung erstrecken, aber gegenüber dieser geneigt oder gekrümmt verlaufen und dabei die Kugelschale 4 sowie die Gelenkkugel 2 in axialer Richtung auf der der Zapfenöffnung 10 abgewandten Seite übergreifen.

Dem Kugelgelenk 7 ist eine in axialer Richtung 5 und durch den Kugelmittelpunkt 13 verlaufende Mittellängsachse 20 zugeordnet, die in der aus Fig. 1 ersichtlichen Lage des Kugelzapfens 3 mit dessen Mittellängsachse zusammenfällt.

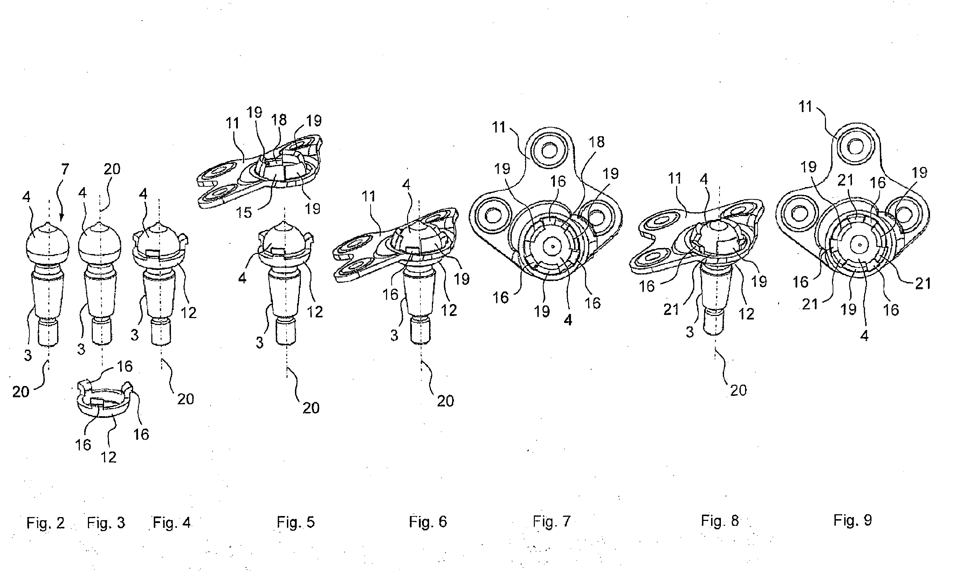

Unter Bezugnahme auf die Fig. 2 bis 9 wird die Montage der Verbindungsanordnung 1 gemäß der ersten Ausführungsform erläutert.

Zunächst wird die Kugelschale 4 auf die Gelenkkugel 2 des Kugelzapfens 3 aufgeschnappt, sodass dieser mit seiner Gelenkkugel 2 schwenkbar und/oder drehbar in der Kugelschale 4 gelagert ist. Der Kugelzapfen 3 bildet zusammen mit der Kugelschale 4 ein Kugelgelenk 7, welches in Fig. 2 gezeigt ist.

Das aus Fig. 3 ersichtliche Verschlussbauteil 12 wird auf den Kugelzapfen 3 aufgeschoben, bis es axial an der Kugelschale 4 anliegt, was in Fig. 4 gezeigt ist. Das Verschlussbauteil 12 weist gemäß der ersten Ausführungsform drei Eingriffselemente 16 auf, die identisch aufgebaut und rings der Mittellängsachse 20 des Gelenks 7 gleichmäßig verteilt angeordnet sind.

Aus Fig. 5 ist das Strukturbauteil 11 ersichtlich, welches auf einer dem Verschlussbauteil 12 abgewandten Seite auf die Kugelschale 4 aufgesetzt wird. Das Strukturbauteil 11 weist drei Axialsicherungen 19 auf, die gleichartig aufgebaut und rings der Mittellängsachse 20 des Gelenks 7 gleichmäßig verteilt angeordnet sind.

Während des Aufsetzens des Strukturbauteils 11 auf die Kugelschale 4, die dabei in die Aufnahmeöffnung 15 eingeführt wird, greifen das Strukturbauteil 11 und das Verschlussbauteil 12 axial ineinander. Dies erfolgt mittels der Eingriffselemente 16, welche die Aufnahmeöffnung 15 durchgreifen. Damit dies möglich ist, sind in dem die Aufnahmeöffnung 15 begrenzenden Rand 18 Ausnehmungen 21 vorgesehen (siehe Fig. 9), durch welche sich die Eingriffselemente 16 axial hindurch erstrecken. Der aufgesetzte Zustand des Strukturbauteils 11 ist in perspektivischer Ansicht aus Fig. 6 und in Draufsicht aus Fig.7 ersichtlich.

Zum Verriegeln des Verschlussbauteils 12 mit dem Strukturbauteil 11 werden diese Bauteile relativ zueinander um die Längsmittelachse 20 des Gelenks 7 zueinander verdreht, sodass die Eingriffselemente 16 mit ihren radialen Vorsprüngen 17 (siehe Fig. 1) auf der dem Verschlussbauteil 12 abgewandten Seite den Rand 18 übergreifen und axial an diesem anliegen. Dieser Zustand ist in perspektivischer Ansicht aus Fig. 8 und in Draufsicht aus Fig. 9 ersichtlich.

Anschließend werden der Verbindungsbereich 14 des Strukturbauteils 11, das Verschlussbauteil 12 und die Kugelschale 4 mit dem fließfähigen, aushärtbaren Material umgossen, welches nach seinem Aushärten das Gussteil 9 gemäß Fig. 1 bildet.

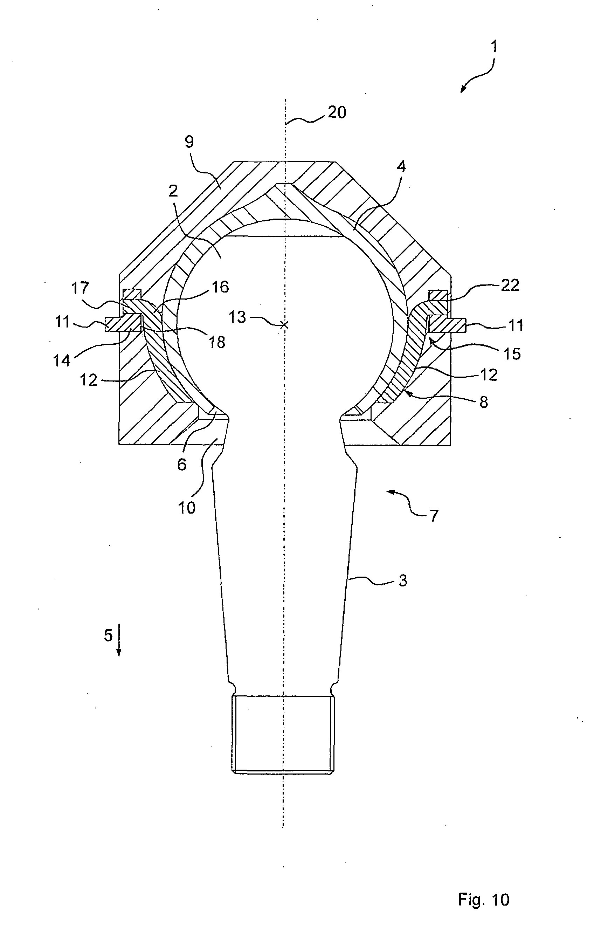

Aus Fig. 10 ist eine Schnittansicht durch eine Verbindungsanordnung 1 gemäß einer zweiten Ausführungsform ersichtlich, wobei zu der ersten Ausführungsform ähnliche oder identische Merkmale mit denselben Bezugszeichen wie bei der ersten Ausführungsform bezeichnet sind. Ein eine Gelenkkugel 2 umfassender Kugelzapfen 3 ist mit seiner Gelenkkugel 2 in einer Kugelschale 4 gleitfähig gelagert und erstreckt sich in einer axialen Richtung 5 durch eine in der Kugelschale 4 vorgesehene Öffnung 6 aus der Kugelschale 4 heraus. Die Kugelschale 4 und der Kugelzapfen 3 bilden zusammen ein Kugelgelenk 7, welches mit der Kugelschale 4 in einer Gelenkaufnahme 8 sitzt, welche die Kugelschale 4 radial umschließt und axial übergreift. Die Kugelschale 4 ist somit axial formschlüssig in der Gelenkaufnahme 8 gesichert.

Die Gelenkaufnahme 8 und die Kugelschale 4 sind in einem Gusssteil 9 angeordnet, welches durch Umgießen der Gelenkaufnahme 8 und der Kugelschale 4 mit einem gießfähigen, aushärtbaren Material hergestellt ist, welches nach seinem Aushärten das Gussteil 9 bildet. Die Gelenkaufnahme 8 und die Kugelschale 4 bilden in diesem Sinne eine in das Gussteil 9 eingebettete Einlage. Das Gussteil 9 ist mit einer Zapfenöffnung 10 versehen, durch welche sich der Kugelzapfen 3 in axialer Richtung 5 aus dem Gussteil 9 heraus erstreckt.

Die Gelenkaufnahme 8 ist aus einem Strukturbauteil 11 und einem Verschlussbauteil 12 zusammengesetzt, welches mit dem Strukturbauteil 11 formschlüssig ineinander greift. Das Verschlussbauteil 12 übergreift dabei die Kugelschale 4 sowie die Gelenkkugel 2 in axialer Richtung auf der der Zapfenöffnung 10 zugewandten Seite und liegt an der Kugelschale 4 an. Dazu erstreckt sich das Verschlussbauteil 12 im Wesentlichen in axialer Richtung, verläuft gegenüber dieser aber geneigt oder gekrümmt. Ferner erstreckt sich das Strukturbauteil 11 auf Höhe des Mittelpunkts 13 der Gelenkkugel 2 in radialer Richtung aus dem Gussteil 9 heraus, wobei der in dem Gussteil 9 eingebettete Teil des Strukturbauteils 11 als Verbindungsbereich 14 bezeichnet wird. Der Verbindungsbereich 14 ist ringförmig ausgebildet und begrenzt eine Aufnahmeöffnung 15, die von dem Verschlussbauteil 12 axial durchgriffen wird. Ferner sitzt die Kugelschale 4 unter Zwischenschaltung des Verschlussbauteils 12 in der Aufnahmeöffnung 15. Das Verschlussbauteil 12 weist an seinem der Zapfenöffnung 10 abgewandten Rand mehrere axial abstehende Eingriffselemente 16 auf, die jeweils mit einem radialen Vorsprung 17 versehen sind. Ferner weist das Strukturbauteil 11 im Verbindungsbereich 14 auf seiner der Zapfenöffnung 10 abgewandten Seite mehrere in Umfangsrichtung des Gelenks 7 verlaufende Schlitze 22 auf, in die jeweils eines der Eingriffselemente 16 mit seinem radialen Vorsprung 17 eingreift. Mittels der Eingriffselemente 16 sind das Strukturbauteil 11 und das Verschlussbauteil 12 formschlüssig miteinander verbunden.

Dem Kugelgelenk 7 ist eine in axialer Richtung 5 und durch den Kugelmittelpunkt 13 verlaufende Mittellängsachse 20 zugeordnet, die in der aus Fig. 10 ersichtlichen Lage des Kugelzapfens 3 mit dessen Mittellängsachse zusammenfällt.

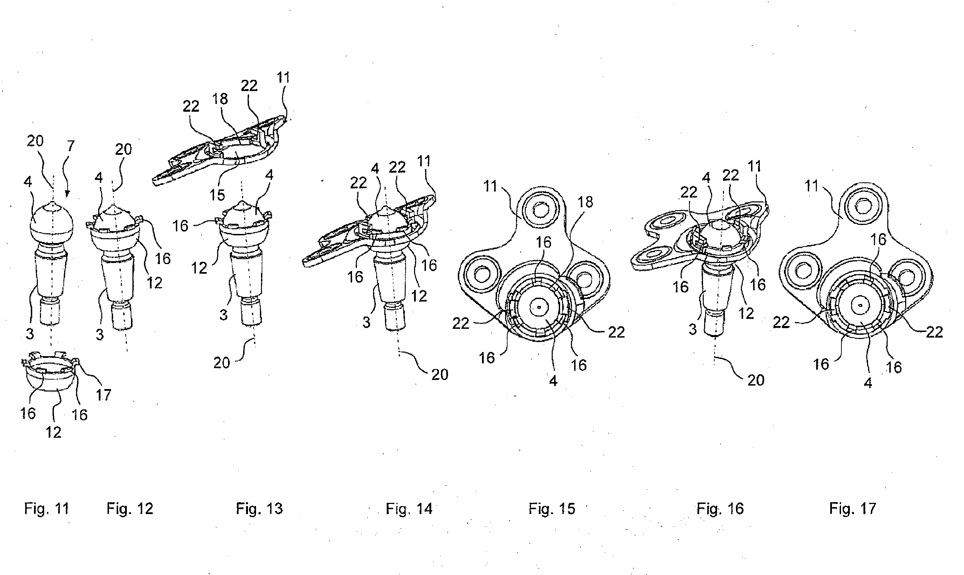

Unter Bezugnahme auf die Fig. 11 bis 17 wird die Montage der Verbindungsanordnung 1 gemäß der zweiten Ausführungsform erläutert.

Zunächst wird die Kugelschale 4 auf die Gelenkkugel 2 des Kugelzapfens 3 aufgeschnappt, sodass dieser mit seiner Gelenkkugel 2 schwenkbar und/oder drehbar in der Kugelschale 4 gelagert ist. Der Kugelzapfen 3 bildet zusammen mit der Kugelschale 4 das Kugelgelenk 7, welches in Fig. 11 gezeigt ist. Ferner ist das Verschlussbauteil 12 aus Fig. 11 ersichtlich.

Das Verschlussbauteil 12 wird auf den Kugelzapfen 3 aufgeschoben, bis es axial an der Kugelschale 4 anliegt, was in Fig. 12 gezeigt ist. Die Eingriffselemente 16 des Verschlussbauteils 12 sind identisch aufgebaut und rings der Mittellängsachse 20 des Gelenks 7 gleichmäßig verteilt angeordnet.

Aus Fig. 13 ist das Strukturbauteil 11 ersichtlich, welches auf einer dem Verschlussbauteil 12 abgewandten Seite auf die Kugelschale 4 aufgesetzt wird. Die Schlitze 22 des Strukturbauteils 11 sind in Umfangsrichtung einseitig offen und rings der Mittellängsachse 20 des Gelenks 7 gleichmäßig verteilt angeordnet. Ferner sind die Schlitze 22 gleichartig ausgebildet.

Während des Aufsetzens des Strukturbauteils 11 auf die Kugelschale 4, die dabei zusammen mit dem Verschlussbauteil 12 in die Aufnahmeöffnung 15 eingeführt wird, greifen das Strukturbauteil 11 und das Verschlussbauteil 12 axial ineinander. Der aufgesetzte Zustand des Strukturbauteils 11 ist in perspektivischer Ansicht aus Fig. 14 und in Draufsicht aus Fig. 15 ersichtlich.

Zum Verriegeln des Verschlussbauteils 12 mit dem Strukturbauteil 11 werden diese Bauteile relativ zueinander um die Längsmittelachse 20 des Gelenks 7 zueinander verdreht, sodass ein Teil der Eingriffselemente 16 mit ihren radialen Vorsprüngen 17 in die Schlitze 22 einrücken. Dieser Zustand ist in perspektivischer Ansicht aus Fig. 16 und in Draufsicht aus Fig. 17 ersichtlich.

Anschließend werden der Verbindungsbereich 14 des Strukturbauteils 11, das Verschlussbauteil 12 und die Kugelschale 4 mit dem fließfähigen, aushärtbaren Material umgossen, welches nach seinem Aushärten das Gussteil 9 gemäß Fig. 10 bildet.

### Bezugszeichen

- 1: Verbindungsanordnung
- 2: Gelenkkugel
- 3: Kugelzapfen
- 4: Kugelschale
- 5: axiale Richtung
- 6: Öffnung in Kugelschale
- 7: Kugelgelenk
- 8: Gelenkaufnahme
- 9: Gussteil
- 10: Zapfenöffnung
- 11: Strukturbauteil
- 12: Verschlussbauteil
- 13: Mittelpunkt der Gelenkkugel
- 14: Verbindungsbereich des Strukturbauteils
- 15: Aufnahmeöffnung
- 16: Eingriffselement
- 17: radialer Vorsprung des Eingriffselement s
- 18: Rand der Aufnahmeöffnung
- 19: Axialsicherung
- 20: Mittellängsachse des Gelenks
- 21: Ausnehmungen im Rand der Aufnahmeöffnung
- 22: Schlitz

## Patentansprüche

1. Verbindungsanordnung für ein Fahrzeug, mit einem einen Verbindungsbereich (14) umfassenden Strukturbauteil (11), einem ein Lagerelement (4) und ein in diesem bewegbar gelagertes und sich aus diesem in einer axialen Richtung (5) heraus erstreckendes Gelenkinnenteil (3) umfassenden Gelenk (7), dessen Lagerelement (4) zusammen mit dem Verbindungsbereich (14) eine Einlage bildet, und einem durch Umgießen der Einlage hergestellten und diese umschließenden Gussteil (9), aus welchem sich das Strukturbauteil (11) und das Gelenkinnenteil (3) heraus erstrecken, **dadurch gekennzeichnet, dass** die Einlage ein formschlüssig mit dem Strukturbauteil (11) ineinander greifendes Verschlussbauteil (12) aufweist, welches zusammen mit dem Strukturbauteil (11) eine das Lagerelement (4) in axialer Richtung (5) formschlüssig sichernde Gelenkaufnahme (8) bildet.

2. Verbindungsanordnung nach Anspruch 1, **dadurch gekennzeichnet, dass** die Gelenkaufnahme (8) das Lagerelement (4) axial umschließt.

3. Verbindungsanordnung nach Anspruch 1 oder 2, **dadurch gekennzeichnet, dass** das Strukturbauteil (11) und das Verschlussbauteil (12) in axialer Richtung (5) ineinander gesteckt sind.

4. Verbindungsanordnung nach einem der vorangehenden Ansprüche, **dadurch gekennzeichnet, dass** das Strukturbauteil (11) und das Verschlussbauteil (12) durch einen Schraubverschluss, einen Drehverschluss oder einen Steck-Drehverschluss formschlüssig miteinander verbunden sind.

5. Verbindungsanordnung nach einem der vorangehenden Ansprüche, **dadurch gekennzeichnet, dass** ein erstes der Bauteile (12) wenigstens ein mit einem radialen Vorsprung (17) versehenes Eingriffselement (16) aufweist, mittels welchem die Bauteile (11, 12) formschlüssig miteinander verbunden sind.

6. Verbindungsanordnung nach Anspruch 5, **dadurch gekennzeichnet, dass** das Eingriffselement (16) sich durch eine in dem zweiten Bauteil (11) vorgesehene Aufnahmeöffnung (15) axial hindurch erstreckt und mit seinem radialen Vorsprung (17) einen diese Öffnung (15) begrenzenden Rand (18) hintergreift.

7. Verbindungsanordnung nach Anspruch 6, **dadurch gekennzeichnet, dass** neben oder im Abstand zu dem Eingriffselement (16) wenigstens eine axial durchgehende Ausnehmung (21) in dem Rand (18) vorgesehen ist, die derartige Abmessungen aufweist, dass das Eingriffselement (16) durch sie hindurch passt.

8. Verbindungsanordnung nach einem der Ansprüche 5 bis 7, **dadurch gekennzeichnet, dass** das zweite Bauteil (11) eine dem ersten Bauteil (12) abgewandte Anlagefläche aufweist, an welcher das Eingriffselement (16) mit seinem radialen Vorsprung (17) axial anliegt.

9. Verbindungsanordnung nach einem der Ansprüche 5 bis 8, **dadurch gekennzeichnet, dass** das zweite Bauteil (11) wenigstens einen in Umfangsrichtung offenen Schlitz (22) aufweist, in den das Eingriffselement (16) radial eingreift.

10. Verbindungsanordnung nach einem der vorangehenden Ansprüche, **dadurch gekennzeichnet, dass** der Verbindungsbereich (14) und das Verschlussbauteil (12) jeweils ringförmig ausgebildet sind.

11. Verbindungsanordnung nach einem der vorangehenden Ansprüche, **dadurch gekennzeichnet, dass** der Verbindungsbereich (14) eine Axialsicherung (19) aufweist, der gegenüber der axialen Richtung (5) zumindest bereichsweise gekrümmt oder geneigt verläuft und das Lagerelement (4) in axialer Richtung (5) übergreift.

12. Verbindungsanordnung nach einem der vorangehenden Ansprüche, **dadurch gekennzeichnet, dass** das Lagerelement (4), der Verbindungsbereich (14) und das Verschlussbauteil (12) mittels des Gussteils (9) fest miteinander verbunden sind.

13. Verbindungsanordnung nach einem der vorangehenden Ansprüche, **dadurch gekennzeichnet, dass** das Gelenkinnenteil (3) einen eine Gelenkkugel (2) umfassenden Kugelzapfen bildet, der mit seiner Gelenkkugel (2) in dem diese umschließenden Lagerelement (4) sitzt.

14. Verfahren zur Herstellung einer Verbindungsanordnung nach einem der vorangehenden Ansprüche, **dadurch gekennzeichnet, dass** das Gelenkinnenteil (3) bewegbar in dem Lagerelement (4) gelagert wird, wonach das Lagerelement (4) zwischen dem Strukturbauteil (11) und dem Verschlussbauteil (12) angeordnet und dieses mit dem Strukturbauteil (11) formschlüssig verbunden wird, bevor die aus dem Lagerelement (4), dem Verbindungsbereich (14) und dem Verschlussbauteil (12) gebildete Einlage mit einem gießfähigen und aushärtbaren Material umgossen wird, welches nach seinem Aushärten das Gussteil (9) bildet.

15. Verfahren nach Anspruch 14, **dadurch gekennzeichnet, dass** das Verschlussbauteil (12) und das Strukturbauteil (11) durch einen Drehverschluss formschlüssig miteinander verbunden werden und zum Ausbilden dieser Verbindung axial ineinandergesteckt und danach relativ zueinander um eine in axialer Richtung (5) verlaufende Längsmittelachse (20) des Gelenks (7) verdreht werden.

## Claims

1. Connecting arrangement for a vehicle, having a structural component (11) which comprises a connecting region (14), a joint (7) which comprises a bearing element (4) and a joint inner part (3) which is mounted movably in the latter and extends out of it in an axial direction (5), the bearing element (4) of which joint (7) forms an insert together with the connecting region (14), and a cast part (9) which is produced by being cast around the insert and enclosing the latter, out of which cast part (9) the structural component (11) and the oint inner part (3) extend, **characterized in that** the insert has a closure component (12) which engages in a positively locking manner into the structural component (11) and, together with the structural component (11), forms a joint seat (8) which secures the bearing element (4) in a positively locking manner in the axial direction (5).

2. Connecting arrangement according to Claim 1, **characterized in that** the joint seat (8) encloses the bearing element (4) axially.

3. Connecting arrangement according to Claim 1 or 2, **characterized in that** the structural component (11) and the closure component (12) are plugged into one another in the axial direction (5).

4. Connecting arrangement according to one of the preceding claims, **characterized in that** the structural component (11) and the closure component (12) are connected to one another in a positively locking manner by way of a screw closure, a rotary closure or a plug-and-twist closure.

5. Connecting arrangement according to one of the preceding claims, **characterized in that** a first of the components (12) has at least one engagement element (16) which is provided with a radial projection (17) and by means of which the components (11, 12) are connected to one another in a positively locking manner.

6. Connecting arrangement according to Claim 5, **characterized in that** the engagement element (16) extends axially through a seat opening (15) which is provided in the second component (11), and engages with its radial projection (17) behind an edge (18) which delimits the said opening (15).

7. Connecting arrangement according to Claim 6, **characterized in that** at least one axially continuous recess (21) is provided in the edge (18) next to or at a spacing from the engagement element (16), which recess (21) has dimensions such that the engagement element (16) fits through it.

8. Connecting arrangement according to one of Claims 5 to 7, **characterized in that** the second component (11) has a bearing face which faces away from the first component (12) and against which the engagement element (16) bears axially with its radial projection (17).

9. Connecting arrangement according to one of Claims 5 to 8, **characterized in that** the second component (11) has at least one slot (22) which is open in the circumferential direction and into which the engagement element (16) engages radially.

10. Connecting arrangement according to one of the preceding claims, **characterized in that** the connecting region (14) and the closure component (12) are in each case of annular configuration.

11. Connecting arrangement according to one of the preceding claims, **characterized in that** the connecting region (14) has an axial securing means (19) which runs in a curved or sloped manner at least in regions with respect to the axial direction (5) and engages over the bearing element (4) in the axial direction (5).

12. Connecting arrangement according to one of the preceding claims, **characterized in that** the bearing element (4), the connecting region (14) and the closure component (12) are connected fixedly to one another by means of the cast part (9).

13. Connecting arrangement according to one of the preceding claims, **characterized in that** the joint inner part (3) forms a ball pivot which comprises a joint ball (2) and is seated with its joint ball (2) in the bearing element (4) which encloses the latter.

14. Method for producing a connecting arrangement according to one of the preceding claims, **characterized in that** the joint inner part (3) is mounted movably in the bearing element (4), after which the bearing element (4) is arranged between the structural component (11) and the closure component (12) and is connected in a positively locking manner to the structural component (11), before the insert which is formed from the bearing element (4), the connecting region (14) and the closure component (12) is cast around with a castable and hardenable material which forms the cast part (9) after it has hardened.

15. Method according to Claim 14, **characterized in that** the closure component (12) and the structural component (11) are connected to one another in a positively locking manner by way of a rotary closure, and are plugged axially into one another in order to form the said connection and are rotated afterwards relative to one another about a longitudinal centre axis (20) of the joint (7), which longitudinal centre axis (20) runs in the axial direction (5).

## Revendications

1. Ensemble de raccordement pour un véhicule, avec un composant de structure (11) comprenant une zone de raccordement (14), une articulation (7) comprenant un élément d'appui (4) et une partie interne d'articulation (3) logée de façon mobile dans celui-ci et s'étendant hors de celui-ci dans une direction axiale (5), dont l'élément d'appui (4) forme une pièce intermédiaire avec la zone de raccordement (14), et une pièce coulée (9) fabriquée par enrobage de la pièce intermédiaire et entourant celle-ci, hors de laquelle le composant de structure (11) et la partie interne d'articulation (3) s'étendent vers l'extérieur, **caractérisé en ce que** la pièce intermédiaire présente un composant de verrou (12) s'engageant par emboîtement dans le composant de structure (11) et qui forme avec le composant de structure (11) un logement d'articulation (8) fixant l'élément d'appui (4) par emboîtement en direction axiale (5).

2. Ensemble de raccordement selon la revendication 1, **caractérisé en ce que** le logement d'articulation (8) entoure axialement l'élément d'appui (4).

3. Ensemble de raccordement selon la revendication 1 ou 2, **caractérisé en ce que** le composant de structure (11) et le composant de verrou (12) sont engagés l'un dans l'autre en direction axiale (5).

4. Ensemble de raccordement selon l'une quelconque des revendications précédentes, **caractérisé en ce que** le composant de structure (11) et le composant de verrou (12) sont assemblés par emboîtement l'un à l'autre par un verrouillage vissé, un verrouillage par rotation ou un verrouillage par enfichage-rotation.

5. Ensemble de raccordement selon l'une quelconque des revendications précédentes, **caractérisé en ce qu'**un premier des composants (12) présente au moins un élément d'accrochage (16) pourvu d'une saillie radiale (17), au moyen duquel les composants (11, 12) sont assemblés par emboîtement l'un à l'autre.

6. Ensemble de raccordement selon la revendication 5, **caractérisé en ce que** l'élément d'accrochage (16) s'étend axialement à travers une ouverture de réception (15) prévue dans le deuxième composant (11) et s'accroche avec sa saillie radiale (17) derrière un bord (18) limitant cette ouverture (15).

7. Ensemble de raccordement selon la revendication 6, **caractérisé en ce qu'**il est prévu dans le bord (18), à côté ou à distance de l'élément d'accrochage (16), au moins un évidement traversant axialement (21), qui présente des dimensions telles que l'élément d'accrochage (16) s'ajuste à travers celui-ci.

8. Ensemble de raccordement selon l'une quelconque des revendications 5 à 7, **caractérisé en ce que** le deuxième composant (11) présente une face d'appui à l'opposé du premier composant (12), sur laquelle l'élément d'accrochage (16) repose axialement avec sa saillie radiale (17).

9. Ensemble de raccordement selon l'une quelconque des revendications 5 à 8, **caractérisé en ce que** le deuxième composant (11) présente au moins une fente (22) ouverte en direction périphérique, dans laquelle l'élément d'accrochage (16) s'engage radialement.

10. Ensemble de raccordement selon l'une quelconque des revendications précédentes, **caractérisé en ce que** la zone de raccordement (14) et le composant de verrou (12) sont réalisés respectivement en forme d'anneau.

11. Ensemble de raccordement selon l'une quelconque des revendications précédentes, **caractérisé en ce que** la zone de raccordement (14) présente un blocage axial (19), qui est incurvé ou incliné au moins localement par rapport à la direction axiale (5) et qui recouvre l'élément d'appui (4) en direction axiale (5).

12. Ensemble de raccordement selon l'une quelconque des revendications précédentes, **caractérisé en ce que** l'élément d'appui (4), la zone de raccordement (14) et le composant de verrou (12) sont solidarisés l'un avec l'autre au moyen de la pièce coulée (9).

13. Ensemble de raccordement selon l'une quelconque des revendications précédentes, **caractérisé en ce que** la partie interne d'articulation (3) forme un pivot sphérique comprenant une rotule (2), qui s'appuie par sa rotule (2) dans l'élément d'appui (4) entourant celle-ci.

14. Procédé de fabrication d'un ensemble de raccordement selon l'une quelconque des revendications précédentes, **caractérisé en ce que** l'on monte la partie interne d'articulation (3) de façon mobile dans l'élément d'appui (4), puis on agence l'élément d'appui (4) entre le composant de structure (11) et le composant de verrou (12) et on assemble ce dernier par emboîtement au composant de structure (11), avant que la pièce intermédiaire formée par l'élément d'appui (4), la zone de raccordement (14) et le composant de verrou (12) soit enrobée d'un matériau apte à être coulé et durci, qui forme après durcissement la pièce coulée (9).

15. Procédé selon la revendication 14, **caractérisé en ce que** le composant de verrou (12) et le composant de structure (11) sont assemblés l'un à l'autre par emboîtement par verrouillage rotatif et, pour réaliser cet assemblage, ils sont engagés axialement l'un dans l'autre et ensuite tournés l'un par rapport à l'autre autour d'un axe longitudinal (20) de l'articulation (7) s'étendant en direction axiale (5).
